Europäisches Patentamt

European Patent Office

Office européen des brevets

(19)

(11) Publication number: **0 222 463**
**B1**

(12) **EUROPEAN PATENT SPECIFICATION**

(45) Date of publication of the patent specification:
25.01.89

(21) Application number: **86202034.4**

(22) Date of filing: **21.08.84**

(60) Publication number of the earlier application in accordance
with Art. 76 EPC: **0137670**

(51) Int. Cl.⁴: **F28D 19/04**, F16J 15/34

(54) **Controlling seal systems in rotary regenerative air preheaters.**

(30) Priority: **23.09.83 GB 8325512**

(43) Date of publication of application:
**20.05.87 Bulletin 87/21**

(45) Publication of the grant of the patent:
**25.01.89 Bulletin 89/4**

(84) Designated Contracting States:
**DE FR GB**

(56) References cited:
**GB-A- 1 391 261**
**GB-A- 2 091 003**
**US-A- 3 232 335**
**US-A- 3 999 597**
**US-A- 4 301 858**
**US-A- 4 306 612**

(73) Proprietor: **DAVIDSON & COMPANY LIMITED, Sirocco
Engineering Works Bridge End, Belfast BT5 4AG
Northern Ireland(GB)**

(72) Inventor: **Gibson, Stanley, 22 Belgravia Road Bangor,
County Down Nortern Ireland(GB)**
Inventor: **Tindall, Colin, 77 Magharatimpany Road
Ballynahinch, County Down Nortern Ireland(GB)**

(74) Representative: **Harrison, David Christopher,
MEWBURN ELLIS & CO 2/3 Cursitor Street, London
EC4A 1BQ(GB)**

**Description**

We have disclosed in our GB-A 1 559 579 and 2 091 003 how a sensor may be used to determine the proximity of sealing systems in rotary regenerative air pre-heaters and how to adjust the gap (or the extent of contact) in them using magnetic drive means controlled from those sensors.

One of the problems in rotary regenerative air pre-heaters is the variability of the physical conditions within it. The present application is concerned with solving that problem, and does it by providing inductive sensors between a stationary and a rotating part of the pre-heater and arranging them so that each "working" sensor is adjacent to a "comparison" sensor which is preset to a predetermined gap. Since the two sensors are subjected to the same physical conditions, the comparison sensor eliminates that variable and enables correct data concerning the actual gap between the parts to be derived from the working sensor.

In GB-A 1 391 261 the gap between parts of a rotor and stator is detected by scanning voltages from separate sources across two adjacent spark gaps until breakdown. One gap is preset, the other is that between the parts. Any difference in the voltages at breakdown represents a difference between the gaps.

In contrast, the present invention uses true sensors, i.e. elements which have (with associated circuitry) the capacity to compare the sensed axial relationship with a desired one; being not dependent on breakdown they may be fed from a single source and be incorporated in a single comparison circuit. Also the manner in which the comparison signal is applied is specific.

The sensors are positioned on a non-rotating part around the path of relative movement of the relatively rotatable parts of the regenerator (hood and stationary matrix or sector plate and rotating matrix). As a seal borne on the moving part sweeps past each sensor in turn a control signal is derived from that sensor. This is dealt with by a control circuit (which can be stationary and outside the hostile environment in which the regenerator is placed) and is converted to a drive signal. This drive signal is communicated to drive means in the form of a magnetic drive device which activates the sealing gap adjustment means at a time when the latter is in close proximity with the given sensor. If that particular sensor perceives that the seal is at too great a gap it will give a signal to the drive such that it will be closed to a certain extent. The drive means is then held on that setting until the sealing means which it is controlling is in proximity with a next sensor. The signal from the next sensor is then fed to that drive means which if necessary adjusts itself and maintains the new setting until a subsequent sensor is passed, and so on.

As already stated, to compensate for changes in conditions at at least some of the sensors, comparison sensors are associated with them to represent a preset gap, in the form of "dummy" sensors adjacent the working ones.

There may be sensors near the hub at the extreme periphery and at intermediate radial positions on the seal frame or on the sector plate, driving appropriately positioned magnetic drive means on the movable element.

When the assembly and method is being used on rotatable matrix machines it would be desirable to use the particularly adapted sensors which have been disclosed in our EP-A 133 793, which discloses a sensor which consists of a U-shaped yoke on the parallel legs of which are mounted coils of unequal number of turns. The yoke is mounted behind a cover plate through which its ends are accessible and the cover plate is discontinuous between the ends of the yokes – most suitably there will be a comparatively narrow parallel side split in the cover plate.

In the accompanying drawings:

Figure 1 is a side part sectional view of a rotating hood regenerative air preheater showing the position of sensors and drive assemblies;

Figure 2 is a plan view of the regenerative air preheater of Figure 1;

Figure 3 is a block diagram of the circuitry involved;

Figure 4 is a sectional plan view of a rotating matrix regenerative air preheater showing the position of the sensors; and

Figure 5 is a sectional elevational view of the regenerative air preheater of Figure 4.

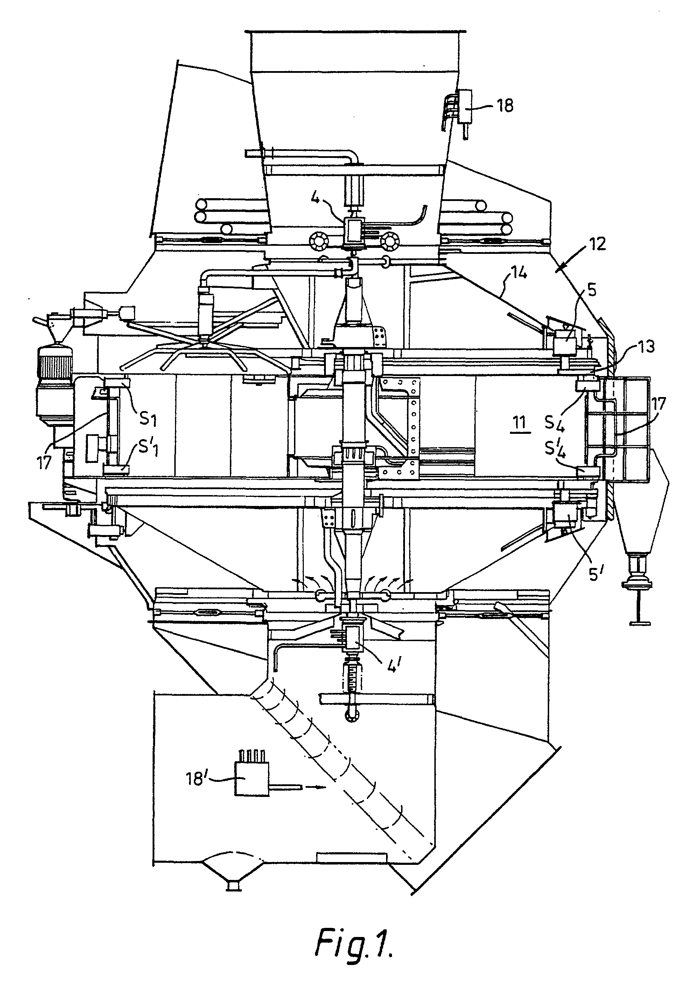

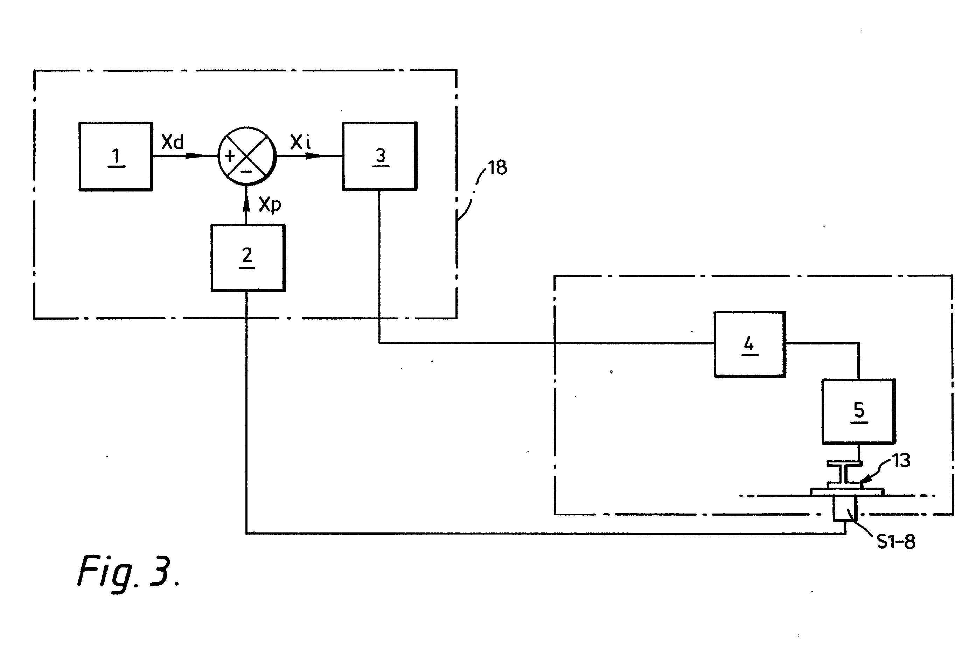

As seen in Figures 1 to 3, a series of sensor assemblies S1–S8 are mounted at regular intervals around the periphery of the upper face of the stationary body 11 of a stationary matrix/rotating hood regenerative air preheater 12. Corresponding assemblies S'1–S'8 are similarly mounted round the lower face, but the following description will be given for only one of these series; the arrangement for the other is identical, mutatis mutandis. Alternatively, the sensor assemblies S1–S8 may be located at another radial position or near the hub of the body 11. The number and position of the sensor assemblies S1–S8 is dependent on the size of the air preheater and the speed of rotation.

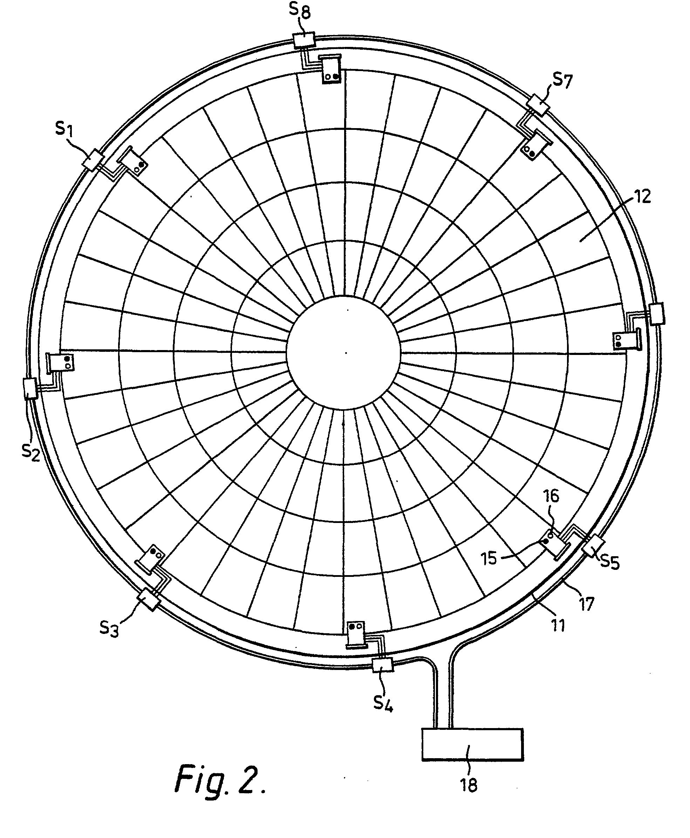

Each sensor detects inductively the proximity of the sealing frame 13 borne on the face of the rotating hood 14 adjacent to the end face of the matrix. Each assembly S1–S8 includes a "live" sensor 15 and a "dummy" sensor 16, indicated (Fig. 2) by full and open circles respectively. Suitable sensors for use on a stationary matrix machine are to be seen in our GB-A 2 091 003, these sensing the proximity of comparatively massive sealing frames on the hoods. Wiring 17 from each of these sensors is taken to a control cabinet 18.

In the control cabinet the input Xp from each of the sensor assemblies S1–S8 successively is processed in circuit 2 and compared with a demand position signal Xd generated in circuit 1.

The signal Xi derived from the comparison in the comparator is fed to the power circuitry 3 and thence through conventional power slip rings 4 to magnetic drive devices 5 mounted on the rotating hoods, to lift the sealing frames or allow them to lower. Such magnetic drive devices are disclosed in our GB-A 1 559 679 as well as in GB-A 2 091 003.

The signal Xi to the magnetic drive device 5 causes it to move in an appropriate direction to adjust the gap between the seal frame 13 and the sensor assemblies S1–S8. This signal is maintained until a signal from a succeeding sensor out of the sensor assemblies S1–S8 indicates, as the hood passes it, that the gap is now wrongly set when that signal will alter the signal Xi and cause an adjustment in the positioning of the sealing frame.

It can be seen that all the sensing and comparatively low amplitude signal circuitry is stationary; the control box may be and preferably is quite remote from the regenerator so that its electronic elements are not subject to the hostile environment in which the regenerator works. However, drive signals passing from that box to the magnetic drive devices being of comparatively high amplitude or power can readily pass through conventional slip ring constructions to the drive devices borne on the rotating part. Furthermore, the sensor assemblies S1–S8 are arranged in a bridge circuit so that they are unaffected by temperature variations.

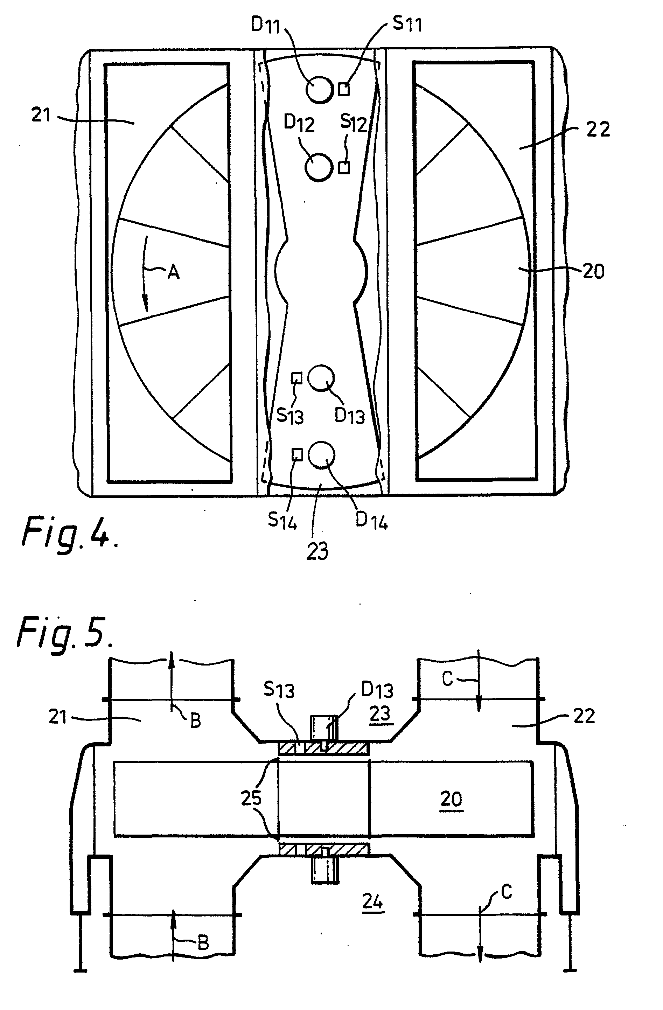

Figures 4 and 5 show a rotating matrix machine with stationary ducts and sector plates. The rotating matrix 20 extends into ducts 21, 22 for air and gas respectively. There are sealing strips 25 on the matrix. Sector plates 23, 24 are located between the ducts 21, 22, one on each side of the matrix 20, each sector plate 21, 22 having two wings carrying sensors assemblies S11 to S14 and magnetic drive devices D11 to D14. The sensors used are preferably those disclosed in our EP-A 133 793. As can be seen from Figure 5, the sensor and drive arrangement on the sector plate 23 above the matrix 20 is the same as that on the sector plate 24 below the matrix 20.

As shown in Figure 4 the drive devices D11 to D14 are arranged on a diametrical line. The number of drive devices is dependent on the size of the air pre-heater. Each drive device D11–D14 has a corresponding "live" sensor in the assemblies S11–S14 which controls its operation, the sensor being placed in a position in advance of the corresponding drive device. For large air preheaters it may be necessary to provide sets of two or more drive devices, each set having drive devices spaced circumferentially on the sector plate. Each set would then have a single "live" sensor.

In the embodiment of Figures 4 and 5 the output of the sensor assemblies S11–S14 is passed to a control cabinet (not shown) as in the embodiment of Figures 1 to 3. There is a similar strategy of control from one sensor governing the position set by the sector plate in relation to the sealing strips 25 until it becomes apparent from the signal received from the subsequent sensor that correction is needed, in which case corrective drive is applied.

It is often found that the air preheaters flex relative to the hub so each wing of the sector plates 23 and 24 have a corresponding arrangement of sensors and drive devices.

A "dummy" sensor is provided adjacent each "live" sensor in the assemblies S11–S14 for temperature compensations, which is particularly important at the hot end of the rotating matrix air preheater.

Aspects of the present disclosure relating to a stationary matrix machine are claimed in EP-A 137 670, from which the present application was divided.

## Claims

1. A rotary regenerative air preheater having means for sealing between relatively rotatable parts (11, 14; 20, 23) of the preheater, and a plurality of electromagnetic drive means (5, D11–D14) for driving the sealing means (13; 23, 25) in a predetermined axial relationship, and control means comprising a plurality of electrical sensor assemblies (S1–8, S11–14) placed sequentially in the path of relative rotation of the sealing means, and a control circuit, live sensors (15) of the sensor assemblies being linked through the circuit to at least one associated said drive means (5, D11–14), the circuit including means for comparing the sensed axial relationship at each sensor assembly with a predetermined axial relationship and driving the associated drive means to bring the sealing means to the predetermined axial relationship, whereby the sealing means is sequentially checked and adjusted as necessary on a plurality of occasions during each relative rotation, characterized in that at least some of said sensor assemblies include comparison sensors (16) representing a preset gap.

2. A rotary regenerative air preheater according to claim 1 wherein the circuit means comprise bridges two legs of which are a said sensor (15) and comparison sensor (16).

3. A rotary regenerative air preheater according to claim 1 or claim 2 wherein the predetermined axial relationship is a gap of between 1 and 2 mm.

4. A rotary regenerative air preheater according to any one of the preceding claims wherein the control means includes a control box (18) which is mounted stationary and remote from the preheater.

5. A rotary regenerative air preheater according to any one of the preceding claims wherein the preheater is of the rotating matrix type, the rotating seal means being strips (25) on the end faces of the matrix (20) and the sensors (S11–13) and drive means (D11–14) being borne on sector plates (23) of a stationary body of the preheater.

6. A rotary regenerative air preheater according to any one of claims 1–4 wherein the preheater is of the stationary matrix type, the rotating seal means being frames (13) on rotating hoods (14), the sensors (S1–8) being stationary and the drive means (5) being borne on the hoods, electrical power supply means to the drive means including slip rings (4) about the axis of rotation of the hoods.

## Patentansprüche

1. Umlaufender Regenerativluftvorwärmer mit einer Dichtungseinrichtung zwischen zueinander verdrehbaren Teilen (11, 14; 20, 23) des Vorwärmers und mehreren elektromagnetischen Antriebseinrichtungen (5, D11–D14) zum Antreiben der Dichtungseinrichtung (13; 23, 25) in einer bestimmten axialen Beziehung und einer Regeleinrichtung, die mehrere elektrische Sensorbaugruppen (S1–8, S11–14) umfaßt, die in der Bahn der relativen Drehbewegung der Dichtungseinrichtung aufeinanderfolgend angeordnet sind, und einen Regelkreis umfaßt, wobei aktive Sensoren (15) der Sensorbaugruppen über den Kreis mit mindestens einer zugeordneten Antriebseinrichtung (5, D11–14) verbunden sind, wobei der Kreis Mittel umfaßt, um die an jeder Sensorbaugruppe ermittelte Axialbeziehung mit einer vorbestimmten Axialbeziehung zu vergleichen und die zugeordnete Antriebseinrichtung anzutreiben, damit die Dichtungseinrichtung die vorbestimmte Axialbeziehung einnimmt, wodurch die Dichtungseinrichtung während jeder relativen Umdrehung bei einer Vielzahl von Gelegenheiten geprüft und in der erforderlichen Weise nachgestellt wird, dadurch gekennzeichnet, daß zumindest einige der Sensorbaugruppen Vergleichssensoren (16) aufweisen, die einen vorgegebenen Spalt darstellen.

2. Umlaufender Regenerativluftvorwärmer nach Anspruch 1, wobei der Kreis Brücken umfaßt, von denen zwei Schenkel der besagte Sensor (15) und der Vergleichssensor (16) sind.

3. Umlaufender Regenerativluftvorwärmer nach Anspruch 1 oder 2, wobei die vorgegebene Axialbeziehung ein Spalt zwischen 1 und 2 mm ist.

4. Umlaufender Regenerativluftvorwärmer nach einem der vorhergehenden Ansprüche, wobei die Regeleinrichtung einen Steuerungskasten (18) aufweist, der im Abstand von dem Vorwärmer stationär angeordnet ist.

5. Umlaufender Regenerativluftvorwärmer nach einem der vorhergehenden Ansprüche, wobei der Vorwärmer von der umlaufenden Matrixbauart ist, wobei die umlaufende Dichtungseinrichtung von an den Endflächen der Matrix (20) angeordneten Streifen (25) gebildet ist und wobei die Sensoren (S11–13) und die Antriebseinrichtungen (D11–14) auf Sektorplatten (23) eines stationären Körpers des Vorwärmers abgestützt sind.

6. Umlaufender Regenerativluftvorwärmer nach einem der Ansprüche 1 bis 4, wobei der Vorwärmer von der ortsfesten Matrixbauart ist, wobei die umlaufende Dichtungseinrichtung von Rahmen (13) auf umlaufenden Hauben (14) gebildet ist, wobei die Sensoren (S1–8) ortsfest sind und die Antriebseinrichtungen (5) auf den Hauben abgestützt sind, wobei die elektrische Energiezufuhr zu den Antriebseinrichtungen die Drehachse der Hauben umgebende Schleifringe (4) aufweist.

## Revendications

1. Préchauffeur d'air rotatif à régénération ayant un moyen pour l'étanchéité entre des pièces relativement rotatives (11, 14; 20, 23) du préchauffeur et un certain nombre de moyens d'entraînement électromagnétiques (5, D11–D14) pour entraîner le moyen d'étanchéité (13; 23, 25) en une relation axiale prédéterminée, et un moyen de commande comprenant un certain nombre d'assemblages capteurs électriques (S1–8, S11–14) placés séquentiellement dans le trajet de rotation relative du moyen d'étanchéité et un circuit de commande, des capteurs vifs (15) des assemblages capteurs étant liés à travers le circuit à au moins un moyen associé d'entraînement (5, D11–14), le circuit ayant un moyen pour comparer la relation axiale captée à chaque assemblage capteur avec une relation axiale prédéterminée et entraîner le moyen associé d'entraînement pour porter le moyen d'étanchéité à la relation axiale prédéterminée, ainsi le moyen d'étanchéité est séquentiellement vérifié et ajusté selon la nécessité en un certain nombre d'occasions pendant chaque rotation relative, caractérisé en ce qu'au moins certains desdits assemblages capteurs comprennent des capteurs de comparaison (16) représentant un espace préétabli.

2. Préchauffeur d'air rotatif à régénération selon la revendication 1 où le moyen formant circuit comprend des ponts dont deux branches sont un capteur (15) et un capteur de comparaison (16).

3. Préchauffeur d'air rotatif à régénération selon la revendication 1 ou la revendication 2 où la relation axiale prédéterminée est un espace compris entre 1 et 2 mm.

4. Préchauffeur d'air rotatif à régénération selon l'une des revendications précédentes où le moyen de commande comprend un coffret de commande (18) qui est monté stationnaire et éloigné du préchauffeur.

5. Préchauffeur d'air rotatif à régénération selon l'une des revendications précédentes où le préchauffeur est du type à matrice rotative, le moyen formant joint rotatif étant formé de bourrelets (25) sur les faces extrêmes de la matrice (20) et les capteurs (S11–S13) et le moyen d'entraînement (D11–14) étant portés sur les plaques de secteur (23) d'un corps stationnaire du préchauffeur.

6. Préchauffeur d'air rotatif à régénération selon l'une des revendications 1–4 où le préchauffeur est du type à matrice stationnaire, le moyen formant joint rotatif étant formé d'encadrements (13) sur des capots rotatifs (14), les capteurs (S1–8) étant stationnaires et le moyen d'entraînement (5) étant porté sur les capots, un moyen d'alimentation en courant électrique vers le moyen d'entraînement comprenant des bagues collectrices (4) autour de l'axe de rotation des capots.

Fig.1.

Fig. 2.

Fig. 3.

Fig.4.

Fig.5.